# EUROPEAN PATENT SPECIFICATION

(11) **EP 2 226 123 B1**
(45) Date of publication and mention of the grant of the patent: **13.02.2013**
(21) Application number: 09154225.8
(22) Date of filing: 03.03.2009
(51) Int. Cl.: B41M 5/26, G02B 21/34, G03B 23/04, B65H 1/06, B65H 1/26, B65H 3/24, B65H 5/04, B65H 29/26

(54) **Apparatus for producing customised containers of marked microscope slides**
Vorrichtung zur Herstellung kundenspezifischer Behälter von markierten Mikroskop-Objektträgern
Appareil de production de conteneurs personnalisés de porte-objets marqués pour la microscopie

(43) Date of publication of application: 08.09.2010
(73) Proprietor: Switch bvba, 9890 Gavere (BE)
(72) Inventor: Magniette, Olivier, 9831 DEURLE (BE)
(74) Representative: Brants, Johan P.E.

(56) References cited:
- JP-A- 53 036 667
- US-A- 4 412 631
- US-A1- 2001 027 931
- US-A1- 2003 155 701
- US-A1- 2003 207 455
- US-A1- 2004 069 572

## Description

### Field of the Invention

The present invention is in the field of automated marked slide production, particularly of customized container of marked slides which markings can be used to identify the sample.

### Background of the Invention

In a hospital or laboratory environment, ease of identification of a microscope slide is of the utmost importance. Microscope slides typically have an identification zone for marking purposes.

When large numbers of samples are prepared on a slide carrier, each slide need to be duly prepared, identified, processed and archived. This puts high demands on sample marking and processing for laboratory staff, who may be confronted with the task manually marking each slide. In cases when machine marking is available, such systems are rarely satisfactory.

A low cost method of machine marking involves ink jet printing either directly onto the slide, or using an adhesive label. However, the inks or adhesive are not always stable or suited to exposure to solvents found in slide processing.

Indelible marking is typically based on either the addition or removal of material from the slide. However, etching a glass surface of a microscope is time consuming and induces stress on the material which may introduce cracks or breaks.

Sample marking needs to be easy, simple, durable and free of contamination. Moreover it should not be repetitive for the operator to the extent that he loses concentration and wrongly labels a slide. Sample marking should preferably be automated, fast, environmentally friendly, and economic.

A system with an inkjet or laser printer for automatically marking microscope slides taken from a dispenser being marked and then ejected as described above is known from US 2003/0 207 455 A1. US 4 412 631 A and US 2003/0 155 701 A1 disclose carousel dispensers, one for magnetic cards, the other for paper sheets. US 2001/0 027 931 A1 discloses a container for transport packing of microscope slides and US 2004/0 069 572 A1 describes an interim storage tower for packets or parcels.

There remains a need in the art for improved apparatus for marking microscope slides, which overcomes at least some of the above-mentioned problems.

### Summary of the invention

According to the invention, there is provided an apparatus for the production of one or more customised containers of microscope slides comprising a laser markable region, which containers are produced according to an order, the apparatus comprising:
- a dispensing carousel disposed with two or more discrete reservoirs for microscope slides, which carousel is configured to select a reservoir and remove a slide therefrom responsive to the order;
- a processing platform configured to receive a slide dispensed from a reservoir and slidably advance it to a laser marking system, and subsequently to an ejection system;
- laser marking system comprising a laser, the beam from which can be directed controllably, configured to mark a markable regions of the slide; and
- an ejection system configured to slidably eject the marked slide into the container; and
- a container dispensing system disposed a container storage tower for empty containers, configured to dispense an empty container to a loading zone that receives slides ejected by the ejection system, and is further configured to eject an order-completed container to a container storage platform.

The apparatus allows the custom production of individual containers of marked slides, automatically on demand, each container holding a desired number of slides in a predetermined order. The laboratory worker, preparing slides of the same sample for analysis by different laboratories, can order a container of blank slides for a patient, which slides are individually are pre-marked at least with an identification of the patient. Samples can be applied to each slide by the worker without the disadvantage of marking each slide manually. Because the slides are pre-marked, they can be automatically sent out to the relevant analytical services *e.g*. within a hospital or externally, with details of the required test and identification of the patient.

Preferably, each reservoir is separately provided with slides of the same kind, for example, having the same visual identification tag such as a coloured or patterned region. Preferably, the apparatus of the invention includes 2, 3, 4, 5, 6, 8, 9, or 10 discrete reservoirs. Preferably, the reservoirs are provided on an indexed carousel. Preferably, each reservoir of the apparatus of the invention is provided with a stack of microscope slides.

Preferably, each microscope slide is provided with a markable region having an electromagnetic radiation-sensitive coating that changes colour permanently on exposure to said electromagnetic radiation. The colour change may be, for example, from white to black, from yellow to black, or any change that provides a visual contrast. The electromagnetic radiation is preferably provided by a laser which forms part of the laser marking system. The laser marking system is configured to mark the coating with writing, or with a one or two dimensional code that can be machine read. Movements by the laser that enable marking may be controlled by a pivotally moving mirror or a mirror array as known, for instance, in DLP® technology (Texas Instruments®). By virtue of the laser, the system is small enough to be installed on a benchtop. The laser does not require equipment normally associated with engraving lasers which can include cooling systems, light amplification, RF Q-switching, all of which increase the size of the system and cost of installation and maintenance.

Preferably, the packer of the invention comprises means to transport a marked slide to a container, and a storage means for storing a plurality of empty containers. The containers may be made from suitable materials, such as cardboard, plastic or metal. The container is preferably cuboid. By providing a supply of empty containers that feed the apparatus, the apparatus can automatically fulfill orders for several containers of slides by running overnight, for example, without intervention from an operator.

One embodiment of the invention is an apparatus (100) for the production of one or more containers (60) of custom-marked microscope slides (16), which containers are produced according to an order, the apparatus comprising:
- a dispensing carousel (10) disposed with two or more discrete reservoirs (12, 12', 12", 12"') for microscope slides, which carousel (10) is configured to select a reservoir (12, 12', 12", 12"') and remove a slide (16) therefrom responsive to the order;
- a processing platform (20) configured to receive a slide (16) dispensed from a reservoir and slidably advance it to a laser marking system (42), and subsequently to an ejection system (54);
- laser marking system (42) comprising a laser the beam from which can be directed controllably, configured to mark a markable region (18) of the slide (16); and
- an ejection system (54) configured to slidably eject the marked slide (16) into the container (60); and
- a container dispensing system (76) disposed with a container storage tower (70) for empty containers (60), configured to dispense an empty container (60) to a loading zone (72) that receives slides (16) ejected by the ejection system (54), and further configured to eject an order-completed container (60) to a container storage platform (74).

Another embodiment of the invention is an apparatus (100) as described above, wherein the laser marking system is configured to mark the markable region with writing or a machine readable code.

Another embodiment of the invention is an apparatus (100) as described above, wherein the laser is a diode laser.

Another embodiment of the invention is an apparatus (100) as described above, wherein the carousel comprises between 2 and 6 slide reservoirs.

Another embodiment of the invention is an apparatus (100) as described above, wherein the processing platform (20) comprises a first pusher plate (30) mounted for slidable movement in the horizontal plane along the longitudinal direction of the platform (20) and configured to slidably advance the microscope slide (16) to the laser marking system (42), and subsequently to the ejection system (54).

Another embodiment of the invention is an apparatus (100) as described above, wherein the ejection system comprises second pusher plate (52) mounted for slidable movement in the horizontal plane along the transverse direction of the platform (20), configured to push the marked slide (16) lengthways, from an ejection zone (50) on the platform (20) across the surface the platform (20) and into the container (60) positioned in the loading zone (72).

Another embodiment of the invention is an apparatus (100) as described above, further comprising a computer or an interface to a computer configured to co-ordinates movements of the dispensing carousel (10), processing platform (20), laser marking system (42), ejection system (54) and container dispensing system (76) responsive to each order.

Another embodiment of the invention is an apparatus (100) as described above, wherein the base of a reservoir (12) is at a least partially closed off by a bar (16) that supports the stack of slides (14), and the wall of a reservoir is provided with horizontal slot 13 configured for dispensing the lower-most slide in the stack (14) radially outwards from the carousel (10).

Another embodiment of the invention is an apparatus (100) as described above, further comprising a dispensing arm, configured to slidably move (36) relative to a reservoir (12), and to advance the lower-most slide widthways from the column of slides in a reservoir outwards through the slot (13) and onto the processing platform (20).

### Detailed description of the Figures

**FIG. 1** A perspective view of an apparatus according to the invention.
**FIG. 1A** An elevation view of a slide-holding reservoir in an apparatus according to the invention.
**FIG. 1B** A side view of a slide-holding reservoir in an apparatus according to the invention
**FIG. 2** Schematic illustration of a laser marking system in an apparatus according to the invention
**FIG. 3** A perspective view of a container suitable for use in the apparatus of the invention.
**FIG. 4** A perspective view of a container indicating the opening permits ease of flipping through a series of slides.
**FIG. 5** A plan view of a microscope slide, disposed with an identification zone.
**FIG. 6** A package of microscope slides, bound by a removable ribbon.
**FIGs. 7 to 18** Series of illustrations indicating sequentially movements of elements of the apparatus in loading a container with marked slides, and ejecting the loaded container.
**FIG. 19** Flow chart indicating instructions provided by a computer to the apparatus of the invention in the completion of one or more orders.

### Detailed description of the invention

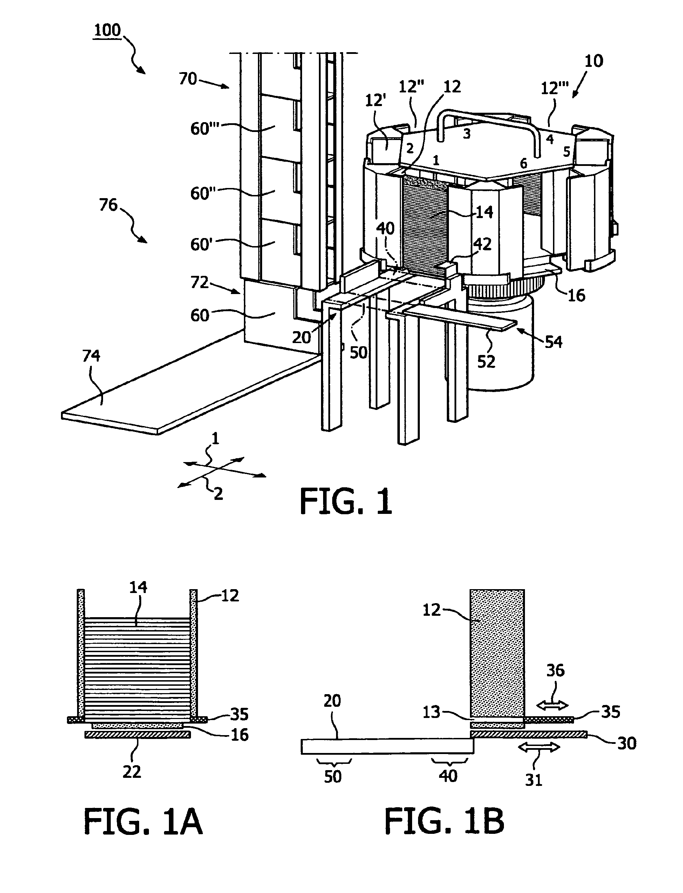

The apparatus **100** according to the invention shown in **FIG. 1** comprises a six-station indexing dispensing carousel **10,** mounted for rotation about a vertical axes on the horizontal upper surface of an enclosed frame. Each station is marked 1 to 6. Six, equally spaced, vertical slide reservoirs **12, 12', 12", 12"'** are mounted around the periphery of the dispensing carousel **10** such that the longitudinal axes of the reservoirs also lie parallel to the axis of rotation of the dispensing carousel **10.** Each reservoir is capable of holding a column of slides. Rotation of the carousel **10** is actuated by any means including a servo motor. A slide from a reservoir **12, 12', 12", 12"'** can be dispensed from the carousel when the selected reservoir is in the dispensing position. Rotation of carousel can bring any of the indexed reservoirs into the dispensing position. In the drawing of **FIG. 1****,** reservoir marked "1" is in the dispensing position.

### Reservoir

The slide reservoirs **12, 12', 12", 12"'** are vertically mounted around the periphery of the dispensing carousel **10** such that the longitudinal axes of the reservoirs also lie parallel to the axis of rotation of the dispensing carousel **10.** Each reservoir is capable of holding a column of slides. The maximum number of slides in each reservoir **12, 12', 12", 12"'** is determined by the dimensions of the reservoir and the thickness of the slides. A reservoir 80 mm wide by 30 mm deep and 70 mm high, may, for example, be employed where the maximum capacity of the reservoir is desired to be about 60 conventional sized microscope slides stacking in a column.

**FIG. 1A** shows a detailed elevation view of one of the reservoirs; **FIG. 1B** shows a detailed side view of one of the reservoirs. The base of the reservoir **12** is at a least partially closed off by a bar **16** that supports the stack of slides **14,** preventing it from passing vertically through the reservoir base. The wall of each reservoir is provided with horizontal slot **13** (**FIG. 1B**) through which the lower-most slide in the stack **14** can be dispensed outwards from the carousel **10,** by the linear movement of a dispensing arm **35** below the carousel **10.** The dispensing arm **35** is configured to slidably move **36** relative to a reservoir **12,** and to advance the lower-most slide widthways from the column of slides in a reservoir outwards through the slot **13** and onto the processing platform **20.**

### Processing platform

The apparatus **100** of **FIG. 1** further comprises a processing platform **20** that is a horizontal table aligned radially with respect to the dispensing position of the carousel **10.** The processing platform **20** is aligned with the longitudinal axis **2** of the apparatus **100.** The processing platform **20** is configured to receive a dispensed slide **16** from the carousel **10** on an upper surface of the platform **20.** The processing platform **20** is disposed with a first pusher plate **30** configured to advance the slide widthways towards a laser marking system that comprises a marking zone **40** on the platform and then subsequently towards an ejection system that comprises an ejection zone **50** on the platform and a second pusher plate **52** configured to advance the marked slide **16** at the ejection zone **50** lengthways into a container **60.**

### First pusher plate

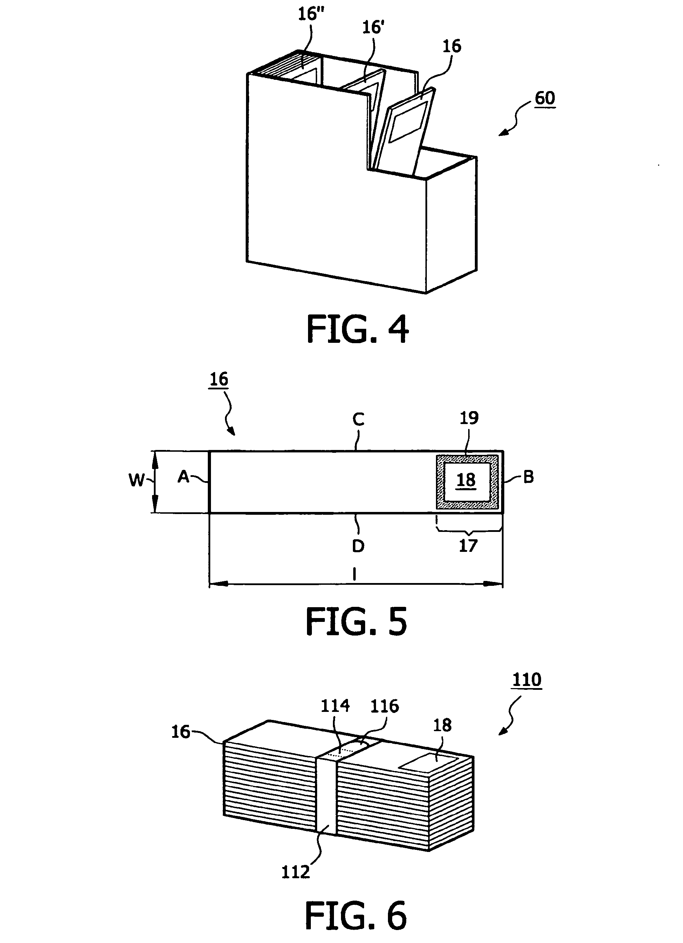

The first pusher plate **30** is located below the level of the carousel reservoir **12** (**FIG. 1B**), and is configured to engage with a slide dispensed therefrom onto the surface processing platform **20.** A pushing edge of the first pusher plate **30** engages with a side (**C** or **D** in **FIG. 5**) of the dispensed slide **16.** The first pusher plate **30** is mounted for linear, slidable **31** movement in the horizontal plane along the longitudinal direction **2** of the apparatus **100.** The direction of movement is preferably radially outwards from the axis of rotation of the carousel **10.** Movement of the first pusher plate **30** is actuated by any means, such as a servo motor or hydraulic piston. The pushing edge of the first pusher plate **30** is configured to advance the dispensed slide **16** onto a marking zone **40** to be marked by the laser of the laser marking system **42,** and then onto the ejection zone **50** to be ejected lengthways into the container **60** by the ejection system. It is also configured to retract the pushing edge to a region below the dispensing reservoir **12.** The first pusher plate **30** can be made from any suitable solid material such as stainless steel, aluminum, or polymeric substance such as polycarbonate.

### Laser marking system

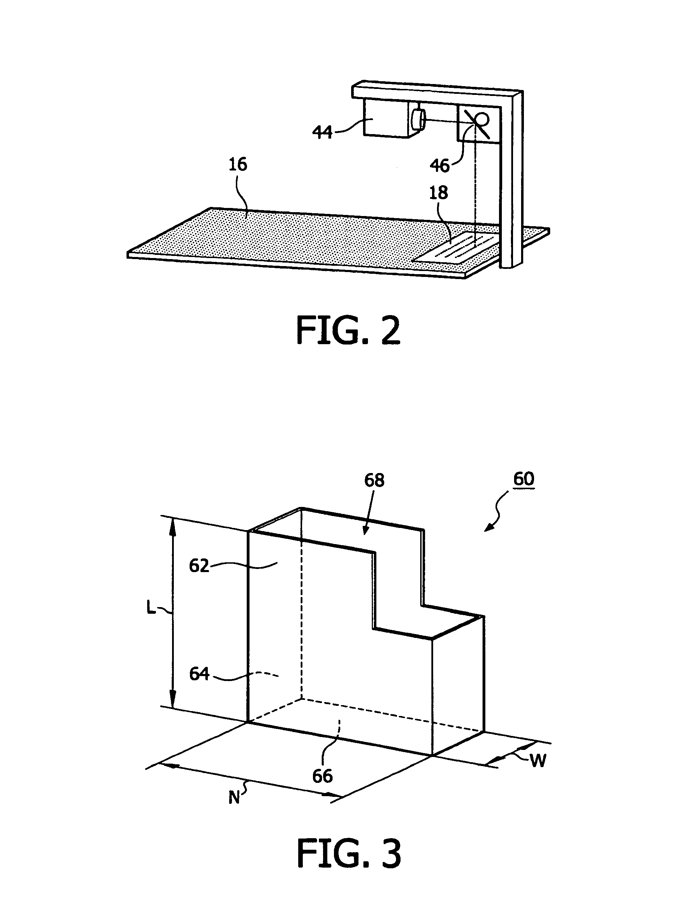

The apparatus of **FIG. 1** further comprises a laser marking system **42.** As shown in **FIG. 2** laser marking system **42** comprises a laser **44,** the beam from which can be directed controllably across the markable region **18** of the slide in the marking zone **40** in order to provide a visual marking such as writing or a machine readable code. Said code may be a one-or two-dimensional barcode. Movement by the laser may be controlled using a pivoted mirror system **46** or a mirror array as known, for instance, in DLP® technology (Texas Instruments®). The mirror or array moves responsive to signal received from a computer.

In a preferred embodiment, the laser **44** is a diode laser, such as a direct diode or diode pumped laser. Diode-lasers have a rugged structure, small size, high efficiency. They consume considerably less electric energy compared with direct pumping by low-power electric current. The output of a diode-laser can be modulated by direct modulation of a pumping current at rates exceeding 1 kHz. This modulation at high velocity is beneficial for a marking process of a barcode, for instance. Its output beam dimensions are compatible with those of optical fibers. Consequently, there is no requirement for perpendicular placement of the laser to a sample processing line. Hence, equipment can be made more compact. As diode-lasers are less expensive than high powered lasers, investment costs can be reduced. The equipment becomes more affordable to smaller laboratories.

In a preferred embodiment, a diode laser delivers a low amount of power. Typically, the amount of power for the invention ranges from 0.1 to 25 watt. In a preferred embodiment, the amount of power ranges from 1 to 10 watt, preferably between 5 and 9 watt. The use of a low power laser has the effect that brittle surfaces, such as glass, can be marked without fracturing.

Light emitted from a diode laser typically has a wavelength in the range of 800 to 2500 nm. Preferably a diode laser with a wavelength of 915 nm is used. Diode lasers are well-known in the art and commercially available.

The beam assembly (i.e. laser **44** and pivoted mirror or mirror array) may be mounted so that the projected laser beam is emitted from above the slide as shown in **FIG. 2****.** However, it is may equally be mounted so that the projected laser beam is emitted from below the slide.

The laser marking system **42** further comprises a marking zone **40** on the platform **20** for receiving a slide **16** dispensed from the carousel **10.** Preferably, the marking zone **40** supports the slide **16** in a horizontal and stationary position during marking. The beam assembly may be covered with a protective shield that prevents an operator of the device from coming into detrimental visual contact with the beam.

The marking system **42,** may further be disposed with one or more sensors (e.g. digital camera) which indicate the position and orientation of the slide in the marking zone **40** which allows the laser to align the marking suitably, relative to the one or more edges of the slide.

### Ejection system

The platform **20** is disposed with an ejection system **54,** configured to eject the marked slide from the platform into the container. The ejection system **54** comprises second pusher plate **52,** configured to push the marked slide **16,** from the ejection zone **50** lengthways across the surface the platform **20** and into the container **60.** A pushing edge of the second pusher plate **52** is configured to push the marked slide **16** by contact with end **A** or **B** in **FIG. 5****.** The second pusher plate **52** is mounted for movement in the horizontal plane, and perpendicular to the direction of movement by the first pusher plate **30.** Movement is preferable along the transverse **4** of the apparatus **100.** Movement of the second pusher plate may be actuated by any means, such as a server motor or hydraulic piston. The second pusher plate **52** can be made from any suitable solid material such as stainless steel, aluminum, or polymeric substance such as polycarbonate.

The ejection system **54** further comprises an ejection zone **50** on the platform **20** for receiving the marked slide **16** advanced from the marking zone **40** by the first pusher plate **30.** Preferably, the ejection zone **50** supports the slide **16** in a horizontal position for engagement by the second pusher plate **52.**

The ejection system **54** may further be disposed with one or more sensors (e.g. digital camera, pressure or optical sensor) which indicates the position and orientation of the slide in the ejection zone **50** which allows the first pusher plate **30** to align the marked slide suitably relative to the second pusher plate **52.**

### Container

The container **60** is generally cuboid in shape as shown, for example, in **FIG. 3****.** The cuboid has a pair of opposing first surfaces **64** of length L and width W, the dimensions of which can accommodate the width (w) and length (I) of the microscope slide **16.** It has a pair of opposing second surfaces **66** of width W and depth N, the dimensions of which can accommodate the width (w) of the microscope slide **16,** and a number of microscope slides. It has a pair of opposing third surfaces **62** of length L and depth N, the dimensions of which can accommodate the length (I) of the microscope slide **16,** and the number of microscope slides. According to one embodiment of the invention, the internal dimensions of a container (in respect of surfaces L and W) are 1 %, 2%, 3%, 5% or 10 % larger than the dimensions of a slide. The internal depth is of sufficient size to accommodate between 5 and 20 slides. The minimum thickness of the wall of the container may be between 0.5 and 2 mm thick. According to a preferred embodiment of the invention, the width (W) of the container is between 27 and 30 mm, length (L) of a container is between 77 to 80 mm, and the depth of a container is between 7 and 50 mm.

The container **60** has an opening **68** that encompasses at least one of the second surfaces **66.** According to one preferred embodiment of the invention, the opening **68** extends over an edge of the cuboid container and partly onto one of the first surfaces **64.** The edged opening **68** allows the user to view the markable regions **17** of the microscope slides without removing the slides from the container **60.** It is preferable that the container is not filled entirely with slides so that a plurality of microscope slides **16, 16', 16"** can be flipped, one slide after the other within the container **60** as shown in **FIG. 4****.**

### Container dispensing system

The apparatus of the invention may further comprises a container dispensing system **76** as shown in **FIG. 1****.** The container dispensing system **76** is disposed with a container storage tower **70** for empty containers, configured to dispense an empty container to a filling zone **72** that receives slides ejected by the ejection system, and further is configured to eject an order-completed container to a container storage platform **74.**

The storage tower **70** is preferably vertical, and configured to store a plurality of empty containers **60, 60', 60", 60"'** stacked one above the other. The tower **70** is particularly configured to store the containers so that the first surfaces **66** are adjacent, preferably contacting. Preferably, it is configured to store the containers so that the opening **68** of each container faces the ejection zone **50.** The containers may be gravity-fed to a loading zone **72** at the base of the tower **70.** The loading zone **72** is configured to receive a dispensed empty container from the tower **70** and position it such that it can receives a slide ejected from the ejection zone **50,** for instance positioned adjacent to the ejection zone **50.**

In preferred embodiment, the loading zone **72** comprises a gap in the vertical tower wall at the base end of the tower through which the opening **68** of lower-most container **60** is exposed and faces the ejection zone **50** i.e. such that the ejected slide enters the container.

The container dispensing system **76** may also comprise a container ejection system, configured to eject an order-completed container onto a container storage platform **72.** To this end, the aforementioned gap of the loading zone **72** may further be configured to allow the lowermost container to be slidably ejected from the tower by the application of force to the 3^{rd} surface of the container. The lowermost container **60** may be ejected using a piston. Preferably, the piston moves along the longitudinal axis **2** of the apparatus **100.** After the lowermost container **60** is ejected, it is replaced by the container immediately above it **60'** in a gravity feeding system.

Ejected container may be stored on a storage platform **72** that is an elongated horizontal platform configured to receive and store ejected containers. The elongate length of the platform lies in the direction of ejection by the piston e.g. along the longitudinal axis **2** of the apparatus **100.** The storage platform **72** may be protected by a removable cover to prevent dust from contacting the slides.

### Slide

A microscope slide **16** suitable for use in the invention typically includes a transparent plate, for instance made of soda lime glass, borosilicate glass or transparent plastic. Suitable transparent plastics are crystal-clear polystyrene or UV-transmittable acrylic resin.

With reference to **FIG. 5****,** the microscope slide has an upper surface (shown), a lower surface and an elongated, rectangular shape of length I, and width w, defined by ends A and B and sides C and D. Typically a microscope slide is 75-76 mm in length, 25-26 mm in width and 1.1 mm thick. The edges of a microscope slide may be rounded.

For marking purposes, the microscope slide has an identification zone **17** comprising a markable region **18.** The identification zone **17** is typically located on the upper surface at one end, such as towards end A of the plate. The identification zone **17** may be frosted.

The markable region **18** comprises a coating which is sensitive to electromagnetic radiation emitted by the laser, that changes colour permanently on exposure to the electromagnetic radiation. In other words, a colour change is effected in the coating, without removal of coating material such as, for instance, by laser ablation, or carbonisation. This has an advantage that contamination of a microscope slide or a sample on a microscope slide is avoided. It also has the advantage that surface modifications such as the formation of craters or edges or foamed parts, are reduced. A coating in this context means a composition which solidified on application to said plate. Said coating may be applied on a plate by conventional means. It may involve crosslinking or polymerization of a carrier and/or loss of a solvent.

The coating may comprise a complex inorganic color pigment. By the term "complex inorganic color pigment" is meant a composition comprising a mixed metal oxide or an oxyanion of a transition metal. The complex inorganic color pigment may comprise copper, molybdenum, silver, tungsten or vanadium oxide or oxyanion of these transition metals. Preferably the complex inorganic color pigment comprises molybdenum trioxide. More preferably the complex inorganic color pigment comprises copper molybdenum tetra oxide.

It has been found that said colour change may advantageously be obtained with a markable region **18** comprising a complex inorganic color pigment. Preferably, the complex inorganic color pigment is part of the coating in the markable region **18.** Consequently, the invention provides a microscope slide, wherein the coating comprises a complex inorganic color pigment, preferably a copper mixed metal oxide pigment, preferably copper molybdenum tetra oxide.

The complex inorganic color pigment will generally be present in a composition for coating a microscope slide at a level of up to 50% w/v, more preferably up to about 40% w/v, more preferably up to 10% w/v.

It has been found that a change in colour can be obtained in a coating containing a complex inorganic color pigment even at significantly reduced laser power, below 10 watt. The change in colour can be obtained even by low power radiation and at marking speeds above 5 mm/s. The inventors believe that the colour change of the coating is triggered by much localized changes; *e.g*. by a change in an excitation or oxidation state of a material at the surface of the pigment particles, brought about by laser irradiation. The color of the oxidized metal may be an indication of degree of its surface oxidation. This has for effect that color centers may be generated via mixed metal oxidation state species. Consequently, colors different from black may be obtainable. The inventors were surprised to find that this combination of laser power below 10 watt and a thin coating comprising complex inorganic color pigment worked particularly well. Especially in view of prior art describing that compositions containing a transition metal oxide mark only very poorly, and/or require very high laser power in order for marking to be achieved.

In a preferred embodiment, said coating comprises an epoxy resin and copper molybdenum tetra oxide. This combination was found to work particularly well. The use of an epoxy resin to obtain the present invention is advantageous, as the application of an epoxy coating is routinely used to prepare microscope slides.

The identification zone **17** may further contain region of colour or pattern that serves as a visual tag, in addition to the markable region. The colour can be selected from a range of colors in a colour-coding scheme. The pattern can be selected from a range of patterns (e.g. stripes, spots) in a pattern-coding scheme. The visual tag **19** (**FIG. 5**) allows rapid classification of the microscope slide without the requirement to read any writing or barcode marked on the markable region **18.**

In a preferred embodiment, a microscope slide of the invention has an identification zone further comprising a visual tag **19.** A visual tag may be a coloured or patterned area. The use of colour or a pattern in the markable region may be used for classification purposes in addition to the information obtained from marking a microscope slide of the invention. Where a barcodes are employed, the visual tag permits a degree of human identification without the assistance of a machine. Improved sample traceability can be achieved. In a preferred embodiment the visual tag **19** is adjacent to the markable region **18.** In a more preferred embodiment, the visual tag **19** is disposed around the perimeter of said markable region **18** as shown in **FIG. 5****.**

It is within the scope of the invention that two or more slide reservoirs **12, 12', 12", 12"'** are loaded with a stack **14** of slides, a stack of slides having an homogenous (i.e. the same) visual tag **19,** at least one reservoir **12, 12', 12", 12"'** having visually tagged **19** slides different from another reservoir. A container **60** may be composed of slides having a specified heterogeneous mix of visually tagged **19** slides by loading one reservoir with an homogenously-tagged **19** stack of slides, and at least one other reservoir with a differently tagged **19** homogenously stack of slides.

### Packaged stack

The present invention also relates to a packaged stack of slides **110** as exemplified in **FIG. 6****.** The package comprises a plurality of slides **16,** stacked on their upper and lower surfaces. The number of slides in a package **110** may be 2, 4, 6, 8, 10, 12, 14, 16, 18, 20, 25, 30, 35, 40 or more. The package **110** has a cuboid shape. The package **110** is bound by a ribbon **112** that wraps around four faces of the cuboid, preferably four of the largest faces. The ribbon **112** may wrap once around the stack. One end of the ribbon **112** may form a pulling tab **116,** configured to release the ribbon **112** around the stack when it is pulled. This may be achieved by sealing the ribbon **112** around the stack with a breakable seal **114,** leaving the exposed ribbon end free, which acts as the pulling tab **116.** When the tab **116** is pulled, the breakable seal **114** is broken upon the application of a pulling force. The ribbon **112** can be removed from around the stack by pulling the ribbon away in the same movement as breaking the seal **114.** The ribbon may be made from any suitable material, such as polypropylene.

### Computer

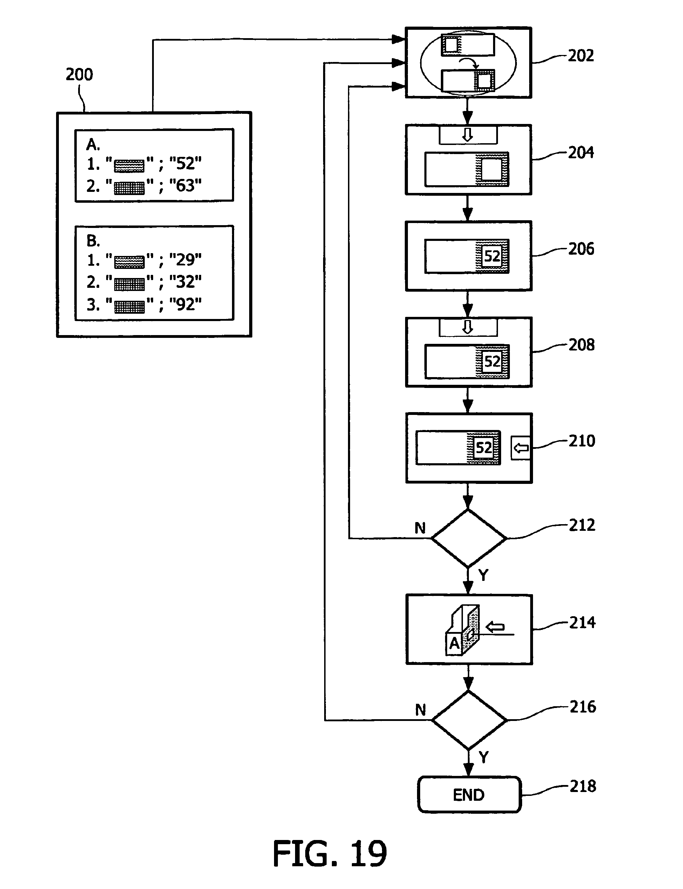

The apparatus of the present invention may further comprise a computer or an interface to a computer that co-ordinates movements of the elements. For instance it may control and co-ordinate one or more of the rotation of the carousel **10,** the slidable movement of the dispensing arm **35,** the slidable movement of the first pusher plate **35,** the slidable movement of the second pusher plate **52,** the laser marking system, and the container dispensing system. The computer may be configured using techniques available to the person skilled in the art. As a general guidance, a flow chart showing the steps performed by a computer interfaced with an apparatus of the invention is shown in **FIG. 19****.** The order **200** comprises instructions for loading two containers "A" and "B". The order for container A requests one slide with a wavy visual tag with marking "52", and a second slide with a chequered visual tag with marking "63". The computer may co-ordinates the elements of the apparatus as follows.
i). Computer instructions the carousel to dispense a slide from the reservoir containing the slides having the visual tag required by the processed slide (*i.e*. a wavy visual tag) (**202**).
ii) Computer instructions first pusher plate to move the dispensed slide to the laser marking system (**204**).
iii) Computer instructions laser marking system to write the marking required for the processed slide ("52") in the markable region of the slide (**206**).
iv) Computer instructions first pusher plate to move the marked slide to the ejection system (**208**).
v) Computer instructions second pusher plate to move the marked slide into a container (**210**).
vi) Computer checks whether further slides are in order (A). If no ("N"), steps i) to v) are repeated for the next slide in the order (which, for order A, is a chequered visual tag with marking "63") (**212**)
vii) If no further slides are in the order ("Y" in **212**), the container is ejected, and a new empty container positioned to receive slides (**214**).
viii) Computer checks whether there are further orders. If yes ("Y"), steps i) to vii) are repeated for the next order (order B), (**216**)
ix) If no further orders are available ("N" in **216**) the computer program ends (**218**)

### In use

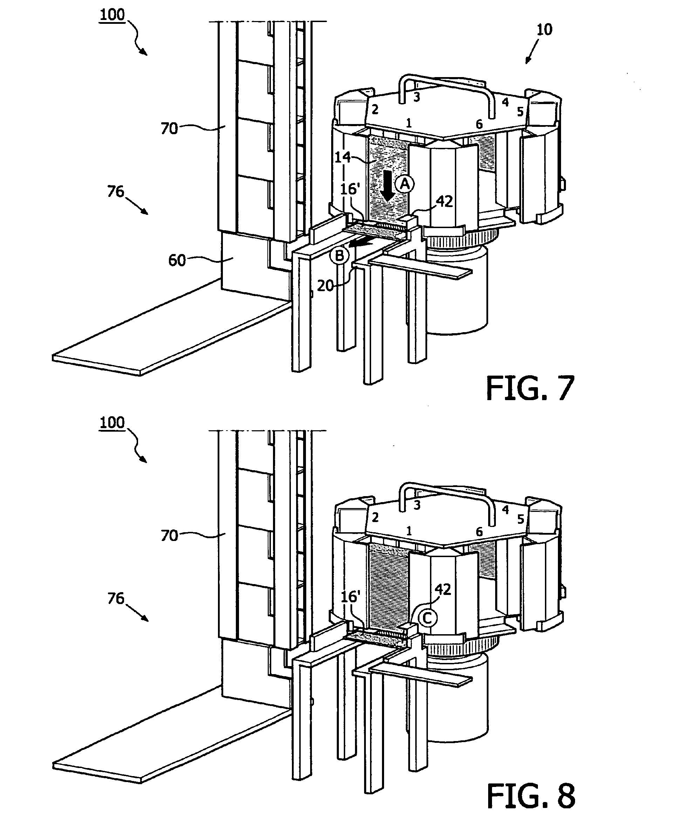

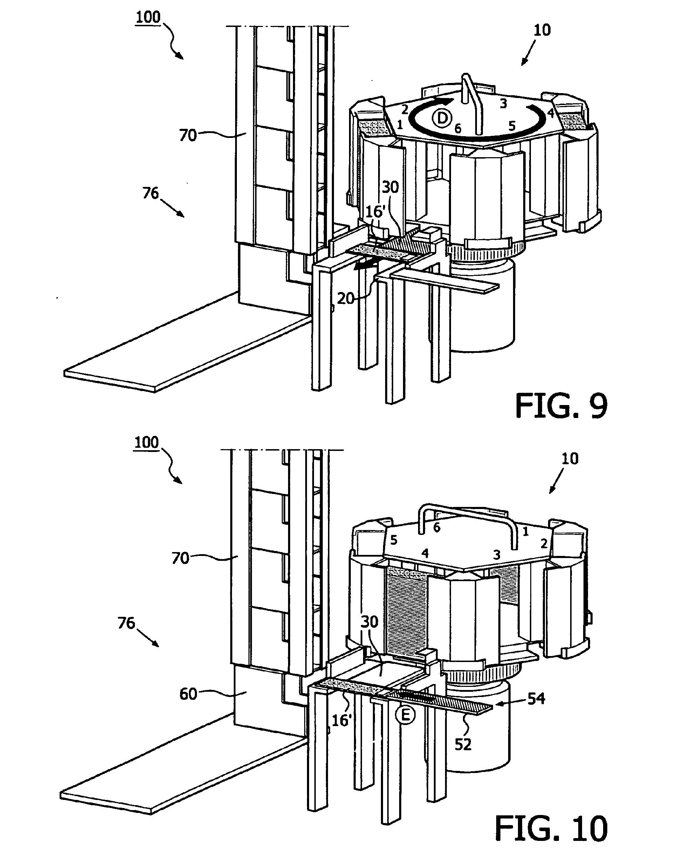

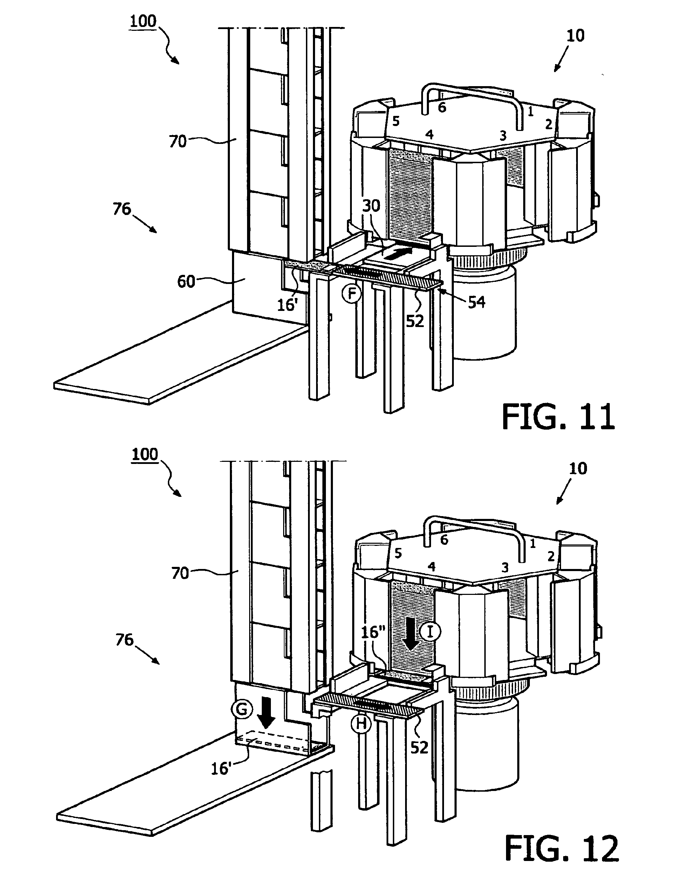

The following is an exemplary description of the steps of operation of the apparatus in the production of a container of slides, which makes reference to **FIGs. 7** to **18****.** In **FIG. 7****,** the reservoir at position 1 is in the dispensing position, and the lower-most slide (first slide) in the stack is dispensed from the reservoir by movement of the dispensing arm in a radial direction outwards from the carousel. The stack of slides **14** moves downwards (**"A"**)**.** The first slide **16'** is dispensed, widthways, onto the processing platform **20** where it is advanced (**"B"**) by the first pusher plate towards the marking zone of the laser marking system. With reference to **FIG. 8****,** the first slide **16'** remains stationary in the marking zone, while it is marked (**"C"**) using a laser marking system **42** comprising a laser whose beam is moved across a markable region of the first slide **16'.** During or after marking of the first slide **16',** the carousel is rotated (**"D"**) to align the next required slide, from reservoir "4", into the dispensing position (**FIG. 9**). Once the first slide **16'** has been marked, the first pusher plate **30** advances the first slide further along the platform **20,** towards an ejection zone (**FIG. 9**). Once the slide **16'** reaches the ejection zone (**FIG. 10**), a second pusher plate **52** pushes (**"E"**) the first slide **16'** lengthways into a container. While a second pusher plate **52** advances (**"F"**), the first slide lengthways into a container (**FIG. 11**), the first pusher plate **30** retracts to below the carousel **10.** It is clearly shown on **FIG. 11** that the second pusher plate **52** moves tangentially to the movement of the first plate **30,** preferably perpendicular thereto (**FIGs. 11**). Once the slide has been ejected into the container, the second pusher plate retracts (**"H"**) (**FIG. 12**).

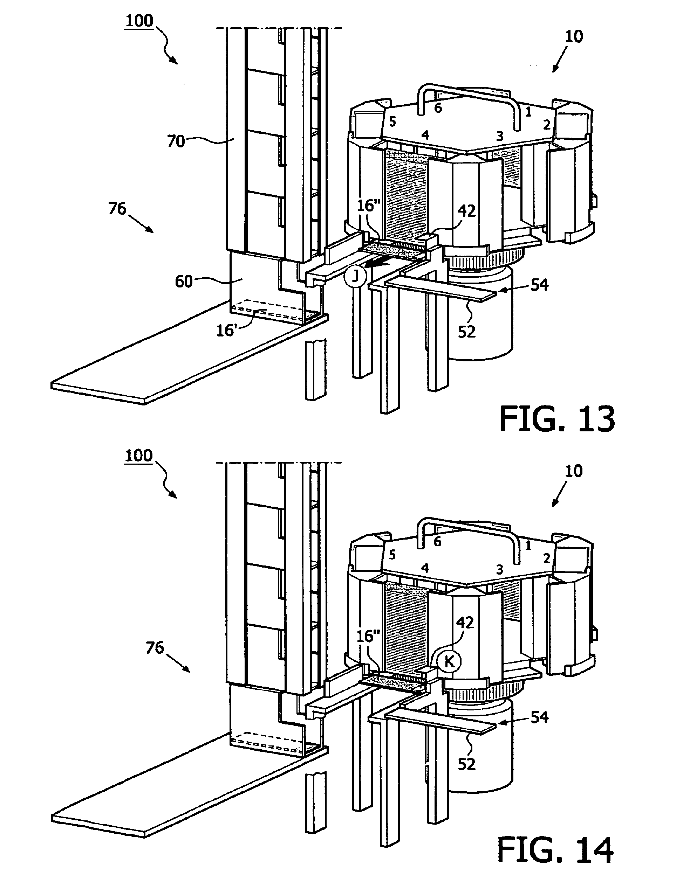

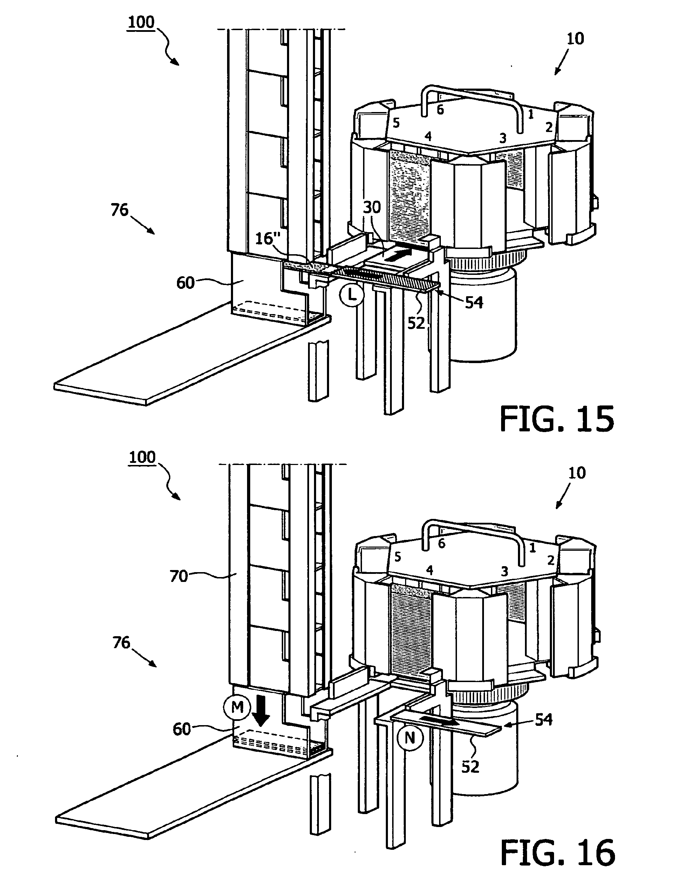

The second slide **16",** from reservoir "4", is subject to the same processing as the first slide **16'.** The second slide **16"** is dispensed, widthways, onto the platform (**FIG. 12**). The stack of slides **14** moves downwards (**"I"**). The second slide **16"** is advanced (**"J"**) by the first pusher plate towards the marking zone of the laser marking system **42** (**FIG. 13**). In the marking zone, the second slide **16"** remains stationary, while it is marked (**"K"**) using a laser and a moving beam (**FIG. 14**). Once the second slide **16"** has been marked, the first pusher plate advances the first slide further along the platform, towards an ejection zone. Once the slide reaches the ejection zone, the first pusher plate **30** retracts (**FIG. 15**). At the ejection zone, the second pusher plate **52** pushes (**"L"**) the second slide **16"** lengthways into the container **60,** the second pusher plate **52** moving tangentially to the movement of the first plate **30,** preferably perpendicular thereto. Once the second slide **16"** has been ejected into the container **60,** the second pusher plate **52** retracts (**"N"**) (**FIG. 16**). The cycle continues, further slides being dispensed from the carousel 10, marked and ejected into the same container **60,** until the order is complete for the container **60.**

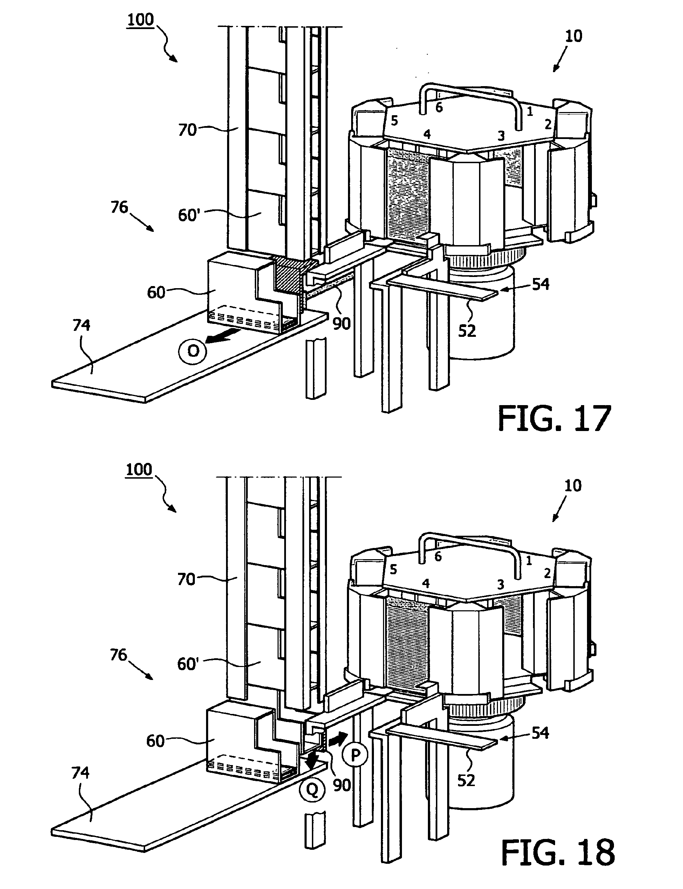

Once the order for the container **60** is complete, the container is ejected (**"O"**) from the base of the vertical storage tower **70** by way of a slidable piston **90** that engages with one of the third surfaces of the container **60** to propel it out from the tower **70** (**FIG. 17**) and onto a horizontal holding platform **72.** After the lowermost container **60** is ejected, it is replaced (**"Q"**) by the container immediately above it **60'** in the gravity feeding system of the storage tower (**FIG. 18**). The piston retracts (**"P"**) once the upper container **60'** is positioned at the base of the tower **70.**

The apparatus of the invention is capable of providing a plurality of containers of marked slides in an automatic manner. Instructions for producing batches of containers can be sent to the apparatus which can operate in a continuous mode overnight.

## Claims

1. An apparatus (100) for the production of one or more containers (60) of custom-marked microscope slides (16), which containers are produced according to an order, the apparatus comprising:
- a dispensing carousel (10) disposed with two or more discrete reservoirs (12, 12', 12",12"') for microscope slides, which carousel (10) is configured to select a reservoir (12, 12', 12", 12"') and remove a slide (16) therefrom responsive to the order;
- a processing platform (20) configured to receive the slide (16) dispensed from the reservoir and slidably advance it to a laser marking system (42), and subsequently to an ejection system (54);
- the laser marking system (42) comprising a laser the beam from which can be directed controllably, configured to mark a markable region (18) of the slide (16); and
- the ejection system (54) configured to slidably eject the marked slide (16) into the container (60); and
- a container dispensing system (76) disposed with a container storage tower (70) for empty containers (60), configured to dispense an empty container (60) to a loading zone (72) that receives slides (16) ejected by the ejection system (54), and further configured to eject an order-completed container (60) to a container storage platform (74).

2. Apparatus according to claim 1, wherein the laser marking system is configured to mark the markable region with writing or a machine readable code.

3. Apparatus according to claim 1 or 2, wherein the laser is a diode laser.

4. Apparatus according to claims 1-3, wherein the carousel comprises between 2 and 6 slide reservoirs.

5. Apparatus according to claims 1-4, wherein the processing platform (20) comprises a first
pusher plate (30) mounted for slidable movement in the horizontal plane along a longitudinal direction of the platform (20) and configured to slidably advance the microscope slide (16) to the laser marking system (42), and subsequently to the ejection system (54).

6. Apparatus according to claims 1-5, wherein the ejection system comprises second pusher plate (52) mounted for slidable movement in the horizontal plane along a transverse direction of the platform (20), configured to push the marked slide (16) lengthways, from an ejection zone (50) on the platform (20) across the surface the platform (20) and into the
container (60) positioned in the loading zone (72).

7. Apparatus according to claims 1-6, further comprising a computer or an interface to a computer configured to co-ordinate movements of the dispensing carousel (10), processing platform (20), laser marking system (42), ejection system (54) and container dispensing system (76) responsive to each order.

8. Apparatus according to claims 1-7, wherein the base of a reservoir (12) is at a least partially closed off by a bar (16) that supports the stack of slides (14), and the wall of a reservoir is provided with horizontal slot 13 configured for dispensing the lower-most slide in the stack (14) radially outwards from the carousel (10).

9. Apparatus according to claim 8, further comprising a dispensing arm, configured to slidably move (36) relative to a reservoir (12), and to advance the lower-most slide widthways from the column of slides in a reservoir outwards through the slot (13) and onto the processing platform (20).

## Patentansprüche

1. Ein Gerät (100) für die Erzeugung von einem oder mehreren Behältern (60) von speziell markierten Objektträgern (16), wobei die besagten Behälter entsprechend eines Auftrags erzeugt werden, wobei das Gerät folgendes umfasst:
- einem Abgabekarussell (10) mit zwei oder mehr diskreten Vorratsbehälter (12, 12', 12",12"') für Mikroskop-Objektträger, wobei das Karussell (10) konfiguriert ist, um ein Vorratsbehälter auszuwählen (12, 12', 12",12"') und ein Objektträger(16) von dort als Folge eines Auftrags zu Entfernen;
- einer Bearbeitungsplattform (20), konfiguriert um den aus dem Vorratsbehälter zugeführten Objektträger (16) zu empfangen und es zu einer Laserbeschriftungsvorrichtung (42) vorwärts gleiten zu lassen, und nachfolgend zu einer Ausstoßvorrichtung (54);
- einer Laserbeschriftungsvorrichtung (42), einen Laser beinhaltend dessen Strahl gesteuert werden kann, und konfiguriert ist, um einen beschriftbaren Bereich (18) des Objektträgers (16) zu beschriften, und
- einer Ausstoßvorrichtung (54), konfiguriert um den beschrifteten Objektträger (16) gleitend in den Behälter (60) auszustoßen, und
- einer Behälterabgabevorrichtung (76), welche über einen Behälteraufbewahrungsturm (70) für leere Behälter (60) verfügt, konfiguriert um einen leeren Behälter (60) an eine Ladezone (72) zuzuführen, welche die von der Ausstoßvorrichtung (54) ausgestoßenen Objektträgern (16) empfängt, und ferner konfiguriert ist, um einen Auftragsvervollständigten Behälter (60) auf eine Behälterlagerungsplattform (74) auszustoßen.

2. Gerät gemäß Anspruch 1, in welchem die Laserbeschriftungsvorrichtung (42) konfiguriert ist um den beschriftbaren Bereich mit einer Beschriftung oder einem maschinell lesbaren Code zu beschriften.

3. Gerät gemäß Anspruch 1 oder 2, in welchem der Laser ein Diodenlaser ist.

4. Gerät gemäß Ansprüche 1-3, in welchem das Karussell zwischen 2 und 6 Objektträger - Vorratsbehälter umfasst.

5. Gerät gemäß Ansprüche 1- 4, in welchem die Bearbeitungsplattform (20) eine erste Schubplatte (30) beinhaltet, die für eine gleitende Bewegung in der horizontalen Ebene entlang einer Längsrichtung der Plattform (20) montiert ist, und konfiguriert ist, um den Objektträger (16) zu der Laserbeschriftungsvorrichtung (42), und anschließend zu der Ausstoßvorrichtung (54) vorwärts gleiten zu lassen

6. Gerät gemäß Ansprüche 1-5, in welchem die Ausstoßvorrichtung (54) eine zweite Schubplatte (52) beinhaltet, die für eine gleitende Bewegung in der horizontalen Ebene entlang einer Querrichtung der Plattform (20) montiert ist, und konfiguriert ist, um den beschrifteten Objektträger (16) in Längsrichtung von einem Ausstoßbereich (50) auf der Plattform (20) über die Oberfläche der Plattform (20) in den Behälter (60) auf dem Ladebereich (72) einzuschieben.

7. Gerät gemäß Ansprüche 1-6, ferner mit einem Computer oder einer Computer-Schnittstelle konfiguriert um die Bewegungen des Abgabekarussells (10), der Bearbeitungsplattform (20), der Laserbeschriftungsvorrichtung (42), der Ausstoßvorrichtung (54) und der Behälterabgabevorrichtung (76), dem jeweiligen Auftrag entsprechend zu steuern.

8. Gerät gemäß Ansprüche 1-7, in welchem der Boden eines Vorratsbehälters (12) zumindest teilweise durch eine Stange (16) geschlossen ist, die den Stapel von Objektträgern (14) stützt, und in welchem die Wand des Vorratsbehälters mit einem waagerechtem Schlitz (13) versehen ist, zur Abgabe des untersten Objektträgers des Stapels (14) in radialer Auswärtsrichtung des Karussells (10), konfiguriert ist.

9. Gerät gemäß Anspruch 8, welches ferner mit einem Abgabearm (36) versehen ist, konfiguriert um zu einem Vorratsbehälter (12) zu gleiten, und den untersten Objektträger des Objektträgerstapels in dem Vorratsbehälter der Breite nach auswärts durch den Schlitz (13) vorzurücken und auf die Bearbeitungsplattform (20) zu schieben.

## Revendications

1. Un appareil (100) pour la production d'un ou de plusieurs récipients (60) pour des lames de microscope (16) marquées sur mesure, dont les dits récipients sont fabriqués conformément à une commande, l'appareil comprenant:
- un carrousel de distribution (10) disposé avec deux ou plusieurs réservoirs discrets (12, 12', 12",12"') pour des lames de microscope, dont le dit carrousel (10) est configuré pour sélectionner un réservoir (12, 12', 12",12"') et retirer une lame (16) de celui-ci en réponse à la commande;
- Une plateforme de traitement (20) configurée pour recevoir la lame (16) distribuée à partir du réservoir et la faire avancer de manière coulissante à un système de marquage au laser (42), et ensuite à un système d'éjection (54);
- Le système de marquage au laser (42) comprenant un laser dont le faisceau peut être dirigé de manière contrôlable, configuré pour marquer une zone markable (18) de la lame (16), et
- un système d'éjection (54) configuré pour éjecter la lame marquée (16) de manière coulissante dans le récipient (60), et
- un système de distribution de récipients (76) intégré par une tour de stockage de récipients (70) pour des récipients vides (60), configuré pour distribuer un récipient vide (60) à une zone de chargement (72) qui reçoit des lames (16) éjectées par le système d'éjection (54), et configuré en outre pour éjecter un récipient (60) rempli et ordonné , à une plateforme de stockage de récipients (74).

2. Un appareil selon la revendication 1, dans lequel le système de marquage au laser est configuré pour marquer la zone markable avec une écriture ou un code lisible par une machine.

3. Un appareil selon les revendications 1 ou 2, dans lequel le laser est un laser à diode.

4. Un appareil selon les revendications 1-3, dans lequel le carrousel comprend entre 2 et 6 réservoirs de lames.

5. Un appareil selon les revendications 1-4, dans lequel la plateforme de traitement (20) comprend une première plaque de poussée (30) montée pour un mouvement coulissant dans le plan horizontal le long d'une direction longitudinale de la plateforme (20) et configurée pour avancer la lame de microscope (16) de manière coulissante vers le système de marquage au laser (42), et par la suite vers le système d'éjection (54).

6. Un appareil selon les revendications 1-5, dans lequel le système d'éjection comprend une seconde plaque de poussée (52) montée pour un mouvement coulissant dans le plan horizontal le long d'une direction transversale de la plateforme (20), configurée pour pousser la lame marquée (16) dans le sens de la longueur, à partir d'une zone d'éjection (50) sur la plateforme (20) à travers la surface de la plateforme (20) et dans le récipient (60) positionné dans la zone de chargement (72).

7. Un appareil selon les revendications 1-6, comprenant en outre un ordinateur ou une interface d'ordinateur configuré pour coordonner les mouvements du carrousel de distribution (10), la plateforme de traitement (20), le système de marquage au laser (42), le système d'éjection (54) et le système de distribution de récipients (76) en réponse à chaque commande.

8. Un appareil selon les revendications 1-7, dans lequel la base d'un réservoir (12) est au moins partiellement fermée par une barre (16) qui supporte la pile de lames (14), et la paroi d'un réservoir est fournie d'une fente horizontale (13) configurée pour distribuer la lame la plus basse de la pile (14) radialement vers l'extérieur du carrousel (10).

9. Un appareil selon la revendication 8, comprenant en outre un bras de distribution (36), configuré pour se déplacer de manière coulissante par rapport à un réservoir (12), et pour faire avancer, dans le sens de la largeur, la lame la plus basse de la pile de lames d'un réservoir vers l'extérieur à travers la fente (13) et sur la plateforme de traitement (20).
